Europäisches Patentamt

European Patent Office

Office européen des brevets

(11) Numéro de publication: **0 224 410**
**A1**

## (12) DEMANDE DE BREVET EUROPEEN

(21) Numéro de dépôt: **86402428.6**

(22) Date de dépôt: **29.10.86**

(51) Int. Cl.⁴: **B 60 Q 1/26**

(30) Priorité: **30.10.85 FR 8516110**

(43) Date de publication de la demande:
**03.06.87 Bulletin 87/23**

(84) Etats contractants désignés:
**DE ES GB IT NL SE**

(71) Demandeur: **Machetel, Henri**
**1, rue Clodion**
**F-75015 Paris(FR)**

(72) Inventeur: **Machetel, Henri**
**1, rue Clodion**
**F-75015 Paris(FR)**

(74) Mandataire: **Corre, André**
**Cabinet Corre A. 17, rue Pasteur**
**F-92300 Levallois(FR)**

(54) Indicateur de direction pour véhicules poids lourds.

(57) Cet indicateur de direction, selon l'invention, est constitué par un jeu de deux boftiers parallépipédiques (1) dont une face (2) destinée à être orientée vers l'arrière du véhicule, est réalisée en matière plastique translucide portant 3 flèches successives (3), (3'), (3"), dont les contours sont dépolis, destinés à indiquer les manoeuvres que va effectuer le véhicule, à droite puis à gauche et inversement.

Derrière cette face translucide (2), et à l'intérieur du boftier, sont disposées des ampoules électriques (4), (4'), (4"), commandées d'une manière connue reliée directement au bloc (7) de la centrale des clignotants du véhicule.

Ces ampoules sont disposées en avant d'éléments réfléchisnants pouvant être constitués d'une feuille d'aluminium réfléchissante (9) disposée contre le fond (5) du boftier (1).

Un faisceau (6) de fils standards relie les trois ampoules par un branchement dit en parallèle branché sur les fils des clignotants. Les trois flèches en matière plastique souple (3), (3'), (3") transparents et teintées par exemple en rouge, sont rapportées par collage intérieurement sur une plaque (2) translucide par exemple en matière plastique type "PLEXIGLAS" fermant le boftier (1) en vis à vis respectivement des ampoules (4), (4'), (4").

FIG.1

EP 0 224 410 A1

# INDICATEUR DE DIRECTION POUR VEHICULES POIDS LOURDS

La présente invention concerne un indicateur de direction plus particulièrement destiné aux véhicules poids lourds, semi-remorques, remorques agricoles et autocars, utilisable dans tous les pays que la circulation soit dite à droite ou à gauche.

Les indicateurs existant actuellement sont discutables sur le plan sécurité car ils ne signalent qu'une seule manoeuvre à venir et non des manoeuvres successives. Ainsi, lorsqu'un ensemble routier est trop long pour garder une trajectoire rectiligne avant de tourner, et lorsqu'il doit néanmoins, par exemple, tourner à droite, il faut impérativement qu'il se déporte sur sa gauche. Le code de la route étant fréquemment mal appliqué et/ou mal compris, le conducteur du véhicule long opère généralement de la façon suivante: dans un premier temps, bien qu'ayant l'intention de tourner à droite, le conducteur prudent met son clignotant à gauche, déporte son véhicule sur la gauche, et dans un deuxième temps, il met son clignotant à droite puis commence immédiatement à changer de direction. Cette manière de faire présente de nombreux inconvénients. Le conducteur du véhicule suiveur ne comprend pas toujours la manoeuvre, et pendant que le clignotant est à gauche, le dit conducteur essaie de faufiler son véhicule par la droite où il risque d'être coincé lorsque le clignotant du poids lourd est mis à droite juste au moment du changement de direction du dit poids lourd. Le conducteur du véhicule suiveur n'a pas à deviner les intentions non signalées du conducteur du poids lourd; et ce manque de signalisation rigoureuse est la cause d'accidents matériels et corporels. Non seulement le véhicule suiveur court des risques, mais en outre le conducteur du poids lourd ne peut rien faire pour les éviter. En particulier dans le cas d'un semi-remorque, le conducteur a des "angles-morts" dans ses rétroviseurs, lors des braquages, ce qui ne lui permet pas de voir le véhicule en mauvaise position, et angoisse le dit conducteur. Ces difficultés se rencontrent aussi bien en milieu urbain que sur route.

L'indicateur, selon l'invention, a pour but de remédier à ces inconvénients. Il compléte utilement les clignotants actuels. Il est caractérisé en ce qu'il comporte au moins un boîtier, monté sur un véhicule de façon à être visible par un véhicule suiveur, boîtier muni d'une face arrière pourvue de flèches disposées à des niveaux différents, et des moyens internes de visualisation de ces flèches. Selon un autre mode réalisation de l'invention, l'indicateur est caractérisé en ce qu'il comporte un jeu de deux boîtiers (ou plusieurs) dont la face arrière est munie de flèches de directions appropriées au côté gauche pour l'un des boîtiers, tandis que les flèches sont orientées symètriquement (par rapport à l'axe du véhicule) pour l'autre boîtier du côté droit. Cet indicateur comporte des moyens de commande de l'alimentation des moyens de visualisation des flèches. Ces moyens de visualisation peuvent être constitués par des ampoules électriques placées derrière les flèches dans le fond du boîtier. Les flèches diposées les unes sous les autres, sont d'abord sensiblement verticales puis inclinées et horizontales et dirigées en directions opposées

On connait certes des boîtiers de signalisation, comme celui décrit dans le brevet suisse n° 513.020 (Albert Haller), mais ces boîtiers ne peuvent pas être montés sur un véhicule pour indiquer des changements successifs de directions lors de la marche du dit véhicule.

Un exemple de réalisation de l'invention va être décrit ci-après en référence aux dessins annexés qui représentes:
- fig.1 une vue en perspective arrière d'un boîtier

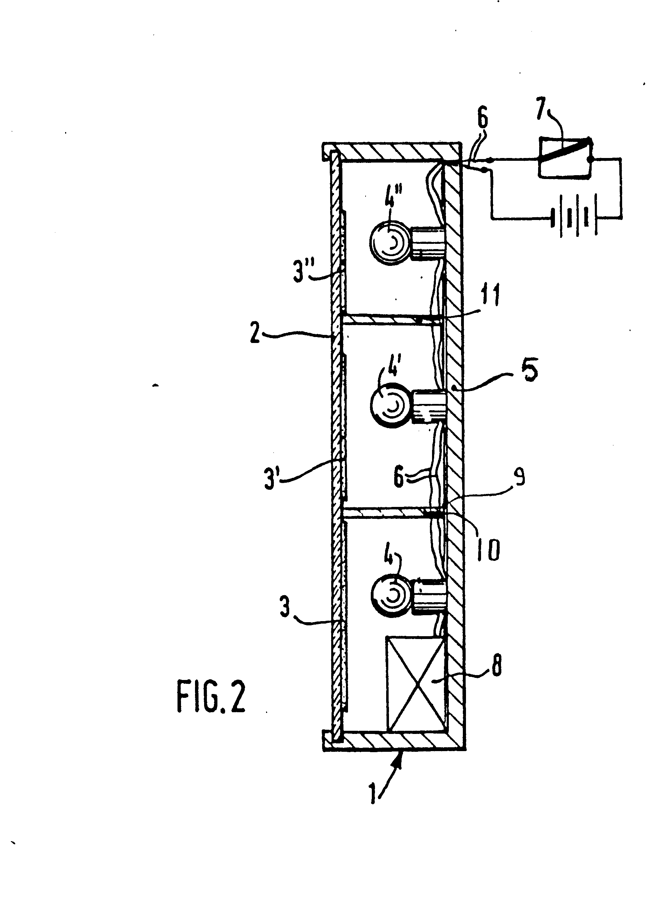

- fig 2 une vue en coupe selon II-II de la figure 1

Cet indicateur de direction, de préférence comporte un jeu de deux boîtiers parallélépipédiques 1 dont une face 2 destinée à être orientée vers l'arrière du véhicule, est réalisée en matière plastique translucide portant trois flèches successives 3, 3', 3", dont les contours sont dépolis, destinés à indiquer les manoeuvres que va effectuer le véhicule, à droite puis à gauche pour l'un des boîtiers, et inversement pour l'autre boîtier.

Derrière cette face translucide 2, et à l'intérieur du boîtier, sont disposées des ampoules électriques 4, 4', 4'', commandées d'une manière connue reliée directement au bloc 7 de la centrale des clignotants du véhicule.

Ces ampoules sont disposées en avant d'éléments réfléchissants pouvant être constitués d'une feuille d'aluminium réfléchissante 9 disposée sur le fond 5 du boîtier 1.

Un faisceau 6 de fils standards relie les trois ampoules par un branchement dit en parallèle branché sur les fils des clignotants. Les trois flèches en matière plastique 3, 3', 3'' teintées par exemple en rouge, sont rapportées par collage sur la face interne de la plaque translucide 2, réalisée par exemple en matière plastique du type connu sous le nom "PLEXIGLASS", fermant le boîtier. Les trois flèches sont placées en vis à vis respectivement des ampoules 4, 4', 4'';

Selon un mode de réalisation préférée de l'invention, le circuit comporte des moyens 8 constitués:
- soit d'un bloc d'allumage instantané des trois ampoules 4, 4', 4'' permettant de mieux capter l'attention des conducteurs suiveurs avec les flèches 3, 3', 3'', branchement en série des trois ampoules pris en pallèle avec les clignotants.
- soit d'un bloc d'allumage des trois flèches successivement de bas en haut 3, 3', 3''.

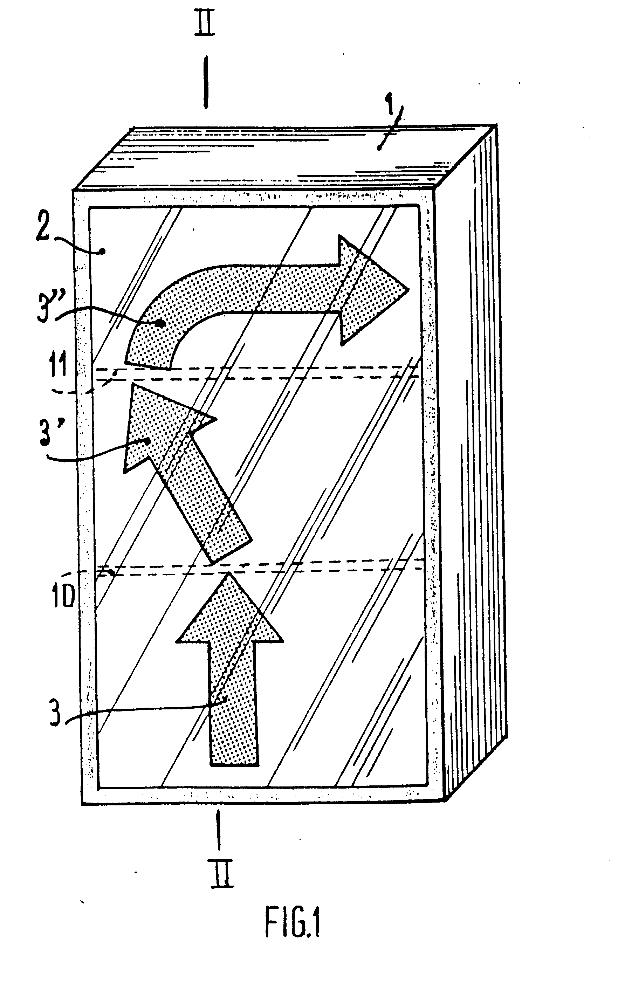

Dans le boîtier 1, les flèches sont positionnées de la façon suivante; dans le cas de circulation à droite, boîtier de droite (voir figure 1)
- la flèche inférieure 3 est disposée verticalement sur la ligne médiane ou légèrement décalée sur la gauche par rapport à celle-ci.

- la deuxième flèche 3' du boîtier est décalée et inclinée sur la gauche par rapport à l'axe médian, et espacée au-dessus de la flèche 3. La flèche 3' prévient du déport.
- la troisième flèche (supérieure) 3'' est espacée audessus de la flèche centrale 3'; elle est disposée horizontalement avec sa pointe dirigée vers la droite et la partie arrière recourbée vers le bas, demeurant sur la gauche au-dessus de la flèche 3'. La flèche 3'' indique la direction finale.

Cette disposition est inversée dans le boîtier de gauche non représenté.

Pour les pays où la circulation est à gauche, les boîtiers sont inversés, c'est-à-dire que pour la boîtier placé à droite:
- la flèche inférieure 3 est disposée bien entendu verticalement.
- la deuxième flèche 3' du boîtier est décalée est inclinée vers la droite par rapport à l'axe médian, espacée au-dessus de la flèche 3.
- la troisième flèche 3'' supérieure est espacée au-dessus de la flèche centrale 3'. Elle est disposée horizontalement avec la pointe dirigée vers la gauche et partie arrière recourbée vers le bas, demeurant sur la droite au-dessus de la flèche 3'.

L'indicateur de direction selon l'invention peut constituer un ensemble prêt à monter, pouvant être adapté sur les véhicules poids lourds ou autres mentionnés ci-dessus.

Dans le cas de nouvelles fabrications de véhicules, il y aura lieu de prévoir deux emboutissages à l'arrière, un à droite et un à gauche, pour que les boîtiers de l'invention soient encastrés dans les carrosseries.

Ce dispositif a pour but d'apporter un complément de sécurité pour tous et n'est pas limité au mode de réalisation illustré sur les figures. Ainsi le nombre de flèches n'est pas limité, de même que les moyens de les définir.

Avantageusement, dans le cas de l'allumage successif des trois ampoules 4, 4', 4'', les dites ampoules sont séparées par des cloisons 10-11. Elles se trouvent chacune dans une case, sous une seule flèche (3 ou 3' ou 3'') ce qui permet d'obtenir un éclairage successif des trois flèches, pariculièrement net.

D'autres variantes de réalisations sont également possibles. Ainsi chaque boîtier peut comporter deux cases supplémentaires, de préférence à sa base, une pour le feu rouge et une pour le clignotant classique. On peut aussi prévoir de monter deux (ou plusieurs) ampoules en parallèle dans chaque case, afin qu'en cas de défaillance de l'une d'elles, le signal correspondant continue néanmoins à être visible pour le conducteur du ou des véhicules suiveurs

L'allumage des flèches peut être commandée par une manette supplémentaire (de type classique ou non) prévue sur le tableau de bord, ou à proximité immédiate, de façon à être facilement accessible par le conducteur. On préfère toutefois utiliser la manette du clignotant pour commander aussi l'indicateur de l'invention. Dans ce cas, on prévoit un manette à deux positions à gauche et deux position à droite, symétriquement à une position neutre centrale. La manette étant au point neutre, une première pression dans un sens déterminé permet de mettre la manette dans la première position et commander le clignotant classique, puis une deuxième pression (dans le même sens) permet de metre la manette dans la deuxième position (la plus éloignée du point de départ) et commander l'indicateur, en plus du clignotant.

On comprend aisément que si le conducteur équipé d'un indicateur selon l'invention, n'a pas de déport à faire du côté opposé à celui où il désire tourner, il utilise seulement son clignotant classique. Par contre, dans le cas où un déport est nécessaire avant de tourner, le conducteur peut alors utiliser l'indicateur selon l'invention, et donc prévenir les véhicules suiveurs de la prochaine manoeuvre complexe

0224410

REVENDICATIONS

1. Indicateur de direction notamment pour véhicules poids lourds, semi-remorques, remorques agricoles et autocars caractérisé en ce qu'il est comporte au moins un boîtier (1) monté sur un véhicule de façon à être visible par un véhicule suiveur, boîtier (1) muni d'une face arrière (2) pourvue de flèches (3, 3', 3'') diposées à des niveaux différents et dans des directions différentes, et des moyens internes (4, 4', 4'') de visualisation de ces flèches (3, 3', 3''), reliés à des moyens de commande et d'alimentation (6, 7, 8).

2. Indicateur selon la revendication 1, caractérisé en ce qu'il comporte un jeu de deux boîtiers dont une face arrière est pourvue de moyens de visualisation (3), (4), définissant des flèches disposées les unes au-dessus des autres,et de directions appropriées au côté gauche pour l'un des boîtiers, tandis que les flèches sont orientées symétriquement (par rapport à l'axe du véhicule) pour l'autre boîtier du côté droit.

3. Indicateur, selon revendication 1 ou 2, caractérisé en ce que la face arrière du boîtier consiste en une matière translucide et comporte trois flèches successives, la première flèche (3) étant verticale, la deuxième flèche (3') étant inclinée, la troisième flèche (3'') étant horizontale; disposée en avant d'éléments d'éclairage (4), (4'), (4'') et d'éléments réfléchissants (9).

4. Indicateur de direction selon la revendication 1 ou 2 caractérisé en ce que le boîtier (2) comporte un fond (5) sur lequel est prévue une feuille d'aluminium réfléchissante (9).

5. Indicateur de direction selon la revendication 1 ou 2 caractérisé en ce que les flèches (3), (3'), (3''), sont illuminées par des ampoules (4), (4'), (4''), prévues derrière chacune des flèches.

6. Indicateur de direction selon la revendication 5 caractérisé en ce qu'il comporte un boîtier (8) de commande simultanée de l'allumage des ampoules (4), (4'), (4''), montées en série, sur un circuit en parallèle, avec les clignotants du véhicule.

7. Indicateur de direction selon la revendication 5 caractérisé en ce qu'il comporte un boîtier (8) d'allumage des ampoules décalé successivement de bas en haut (4), (4'), (4''), ce qui permet à l'allumage successif des flèches.

8. Indicateur de direction selon la revendication 7 caractérisé en ce que les ampoules (4-4'-4'') sont séparées par des cloisons (10-11) déterminant une case par ampoule

9. Indicateur de direction selon les revendications 6 ou 7, caractérisé en ce que chaque boîtier est muni de plusieurs ampoules montées en parallèle par case.

10. Indicateur de direction selon l'une quelconque des revendications précédentes caractérisé en ce que le boîtier comporte deux cases cases supplémentaires, une pour le feu rouge et une pour le clignotant classique.

11. Indicateur selon la revendication 1 ou 6 ou 7, caractérisé en ce qu'il comporte une seule manette pour commander le clignotant classique et la visualisation des flèches (3, 3', 3'') du ou des boîtiers (1) et qu'à cet effet la manette comporte deux positions à gauche et deux positions à droite, de telle manière qu'une légère pression, dans un sens ou dans l'autre, permet de commander le clignotant désiré, et qu'une pression plus forte permet de commander, en plus, l'éclairage des flèches appropriées.

0224410

FIG.1

FIG.2

Office européen
des brevets

**RAPPORT DE RECHERCHE EUROPEENNE**

Numero de la demande

EP 86 40 2428

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | CH-A- 513 020 (HALLER)<br>* Figure 1 *<br><br>----- | 1 | B 60 Q 1/26 |

DOMAINES TECHNIQUES
RECHERCHES (Int. Cl.4)

B 60 Q
F 21 V

Le present rapport de recherche a été établi pour toutes les revendications

| Lieu de la recherche | Date d'achèvement de la recherche | Examinateur |
|---|---|---|
| LA HAYE | 03-02-1987 | ONILLON C.G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82